# EUROPEAN PATENT SPECIFICATION

(11) **EP 2 420 141 B1**
(45) Date of publication and mention of the grant of the patent: **12.10.2016**
(21) Application number: 11006848.3
(22) Date of filing: 22.08.2011
(51) Int. Cl.: A01N 25/06, C05C 9/00, C05G 3/06

(54) **Methods of reducing phytotoxicity of a pesticide**
Verfahren zur Verringerung der Phytotoxizität von Pestiziden
Procédés de réduction de la phytotoxicité d'un pesticide

(30) Priority: 20.08.2010 US 375595 P
(43) Date of publication of application: 22.02.2012
(73) Proprietor: Oro Agri, Inc., Fresno, CA 93725 (US)
(72) Inventor: Pullen, Erroll Melvyn, Somerset West, 7130, Western Cape (ZA); Uys, Dirk Cornelius, Somerset West, 7130, Western Cape (ZA)
(74) Representative: Kador & Partner

(56) References cited:
- WO-A1-2006/052228
- WO-A1-2009/068802
- WO-A2-01/26457
- WO-A2-2008/097553
- KR-A- 20070 084 090
- US-A1- 2003 035 852
- US-A1- 2010 144 534
- US-B1- 6 500 445

## Description

### FIELD OF THE INVENTION

The present invention relates to methods of pesticide application to a plant or crop without the risk of causing phytotoxicity.

### BACKGROUND

Environmentally safe methods for the control of plant pests using non-toxic agents represent ecologically sound alternatives to the use of synthetic chemical pesticides, insecticides, fungicides, miticides, adjuvants for crop-care chemicals and the like. Damage caused to the environment, including natural aquifers and animal and plant species due to runoff of these chemicals is an ecological problem faced by virtually every country in the world. This environmental damage leads to enormous difficulties reflected in, for example, increased health care costs and ecological harm. There is a significant unmet need for environmentally safe methods for the control of pests using agents having low, or no phytotoxicity, but which have high activity against target pests.

The need in the industry is for environmentally safe methods for the control of pests through, in the first instance, the efficient application of pesticides without resulting in phytotoxicity, and additionally by obtaining a complete coverage of the foliage and fruit. In the second instance, lower spray volumes per area unit are desirable as they save on refilling time of the spray tank, resulting in more spraying time compared to refilling time. This leads to more efficient use of equipment, and fuel and operator time. It also saves on energy needs by either having less volume of spray solution to pressurize or in other instances, eliminating the need for air fans delivering huge volumes of high speed air flow. However, lowering the spray volumes causes several problems if droplet size is not reduced. Conventional spraying methods with low volumes result in the deposition of very fine droplets that dry quickly without run-off to the edges of leaves and fruit. Moreover, when conventional high volume sprays are used, droplets may be formed, and due to the nature of the spray mixture containing high concentration of surfactants, the surfactants repel each other and move towards the outer surface of the droplet. At this surface, the surfactants repel each other again with the result that they move towards the contact surface between the water and the plant tissue at which place they are concentrated and may cause phytotoxicity upon drying of the droplet. This phytotoxicity occurs as a ring at the edge of the droplet.

WO 2008/097553 A2 is concerned with agents for the control of pests comprising high terpene containing oils and surfactants. These compositions are applied to plants by low volume spraying. However, high concentration per specific unit area is not disclosed or the technical effect of this appreciated.

Thus there is the need for a method being effective avoiding phytotoxicity and allowing higher efficiency as to equipment and operator time.

### SUMMARY OF THE INVENTION

The present invention is based on the finding that this problem can be solved by a method of applying a spray mixture comprising high concentrations of surfactants and high concentrations of terpene containing oils in the spray mixture, wherein the spray mixture is being applied in the form of micro-droplets.

The present invention is particularly concerned with a method of applying a spray mixture in an amount of up to 500 l/ha, the spray mixture comprising an active mixture, whereby the concentration of active mixture is between 2 vol% to 35 vol% based on the volume of the spray mixture and wherein the active mixture comprises one or more surfactants in a concentration of 10 vol% to 35 vol% based on the volume of the active mixture, and terpene containing oils in an concentration of 6 vol% to 35 vol%, based on the volume of the active mixture and wherein the spray mixture is applied in the form of micro-droplets.

Plant volume as used herein means the volume of a plant or crop per surface area of land

Pesticides as defined by the Federal Insecticide, Fungicide, and Rodenticide Act (FIFRA), include "any substance or mixture of substances intended for preventing, destroying, repelling, or mitigating any insects, nematodes, fungi, or weeds, or any other forms of life declared to be pests".

Substances and/or mixtures of substances achieving these effects exhibit a "pesticide activity".

A pesticide activity as used herein is inherent in "spray mixtures", "active mixtures", "pesticides" and can be inherent in "adjuvants".

As used herein a composition having pesticide activity is called "spray mixture". A spray mixture is a composition which is sprayed on the plant and/or crop. Therefore, a spray mixture contains all ingredients comprised therein at the final concentration the plant and/or crop are supposed to be supplied with.

In principle a spray mixture can be prepared by various methods known in the art. The present invention preferably provides a spray mixture by dilution of an active mixture.

As used herein the term adjuvant describes any substance or composition which has the effect that the absorption of any associated product, e.g. a pesticide, may be increased by increasing the concentration of the adjuvant. Accordingly, an active mixture comprising an adjuvant e.g. orange oil, which is a terpene containing oil, may increase the penetrability of the cuticle of the plant surface by opening up minute pores, allowing other substances to penetrate. The same applies to insects where the protective layer is disrupted, allowing pesticides to penetrate into the living tissues underneath.

The spray mixture of the invention comprises one or more surfactants and one or more terpene containing oils.

An "active mixture" as used herein is a mixture comprising surfactants, terpene containing oils and other ingredients.

The present terpene containing oils can be used as a pesticide and/or an adjuvant. Therefore, the active mixture comprising terpene containing oils is used as an agricultural pesticide and/or an agricultural adjuvant. When the active mixture of the present invention is a pesticide, the content of surfactants is higher compared with the embodiment when the active mixture is an adjuvant. Thus, when the active mixture is an adjuvant, the concentration of surfactants in the active mixture is relatively lower and additional pesticides can be comprised in the spray mixture. The dilution factor of the active mixture to prepare the spray mixture differs depending on whether the active mixture is a pesticide or an adjuvant.

As used herein, the term "terpene" refers to any of a class of chemical compounds that are widespread in nature, mainly in plants as constituents of essential oils. Many terpenes are hydrocarbons, but oxygen-containing compounds such as alcohols, aldehydes or ketones (terpenoids) are also found. Terpenes are generally associated with characteristic fragrances. Some terpenes are alcohols (e.g., menthol from peppermint oil) and some terpenes are aldehydes (e.g., citronellal). Terpenes are made up of isoprene (CH₂=C(CH₃)-CH=CH₂) units. Certain terpene hydrocarbons have molecular formulas (C₅H₈)ₙ, and may be classified according to the number of isoprene units. When terpenes are modified chemically, such as by oxidation or rearrangement of the carbon skeleton, the resulting compounds are generally referred to as "terpenoids." As used herein, the term "terpene" includes all "terpenoids."

As used herein "terpene containing oils" means oils comprising one or more terpenes and characterized in that the total terpene content in these oils is high which means at least 50 vol%. The spray mixture of the present invention comprises one or more terpene containing oils comprising one or more terpenes.

Preferably, the terpene containing oils is a citrus oil. Preferably the citrus oil is selected from the group consisting of orange oil, lemon oil, lime oil, grapefruit oil, tangerine oil and mixtures thereof. The citrus oils may be obtained by any method from a citrus fruit. For example, citrus oil may be obtained from the skin or peel of a citrus fruit. Other methods of obtaining the citrus oil include but are not limited to cold pressing techniques.

As used herein a surfactant is a surface-active agent modulating the surface tension of liquids in which it is dissolved. Preferably, the spray mixture of the invention may comprise one or more surfactants selected from the group consisting of non-ionic, anionic, cationic, and amphoteric surfactants. A person skilled in the art will understand that a mixture of different types of surfactants can also be used unless undesirable interactions occur. More preferably the one or more surfactants are a blend of one or more alcohols and one or more polysaccharides. Most preferred, the one or more surfactants may comprise one or more alkyl glucosides.

"Micro-droplets" as used herein denote particles in the category extra fine (XF), very fine (VF), fine (F) and/or medium (M) according to ASABE S-572 Droplet Standard (ASABE: American Society of Agricultural and Biological Engineers). Preferably, the micro-droplets as used in the present invention have a volume median diameter (VMD/DV₅₀) of 60 to 280 µm, preferably 130 µm to 210 µm, more preferably 150 µm to 210 µm and most preferably 140 µm to 160 µm when measures according to the ASABE S-572 Droplet Standard.

Generally speaking the preparation of micro-droplets is not limited within the present invention. The micro-droplets of the spray mixture may be formed using an electrostatic and/or electrodynamic spray system or a fogger. Preferably the micro-droplets of the spray mixture are obtainable by using a fogger or sprayer, such as a London Fogger (see www.londonfogger.com; e.g. Model 18-20), CIMA sprayer (see www.cima.it/ENGLISH/EN_Sprayers.htm) or Foggers from Curtis Dyna-Fog.Ltd. (www.dynafog.com; e.g. AG-Mister LV-8™).

The novel methods described herein allow controlling pests with a manner that no or very little phytotoxicity is caused. The present invention provides methods of applying a spray mixture to the plant and/or crop comprising a high concentration of active mixture thereby a low volume of spray mixture is applied.

A skilled person in the art will understand that conventional high volume sprayers are not suitable for providing micro-droplets. The present invention is directed to methods of applying spray mixtures to a plant and/or crop in form of a low volume spray mixture thereby applying a high concentration of active mixture in the spray mixture.

The terms "active against a (first or second) pest" include direct or indirect effects, such as inducing death of the pest, repelling the pest from any part of the plant, comprise seeds, roots, shoots and/or foliage, inhibiting feeding of the pest on, or the laying of its eggs on, the plant seeds, roots, flowers, shoots and/or foliage, and inhibiting or preventing reproduction of the pest.

"Plant pest" means any organism known to associate with plants and which, as a result of that association causes a detrimental effect on the plant's health or vigor, excluding vertebrates like mammals, fish and birds.

The term "plant" as used herein encompasses whole plants and parts of plants such as roots, flowers, shoots, stems, leaves, seedlings, germinated seeds and seed, as well as cells and tissues within the plants or plant parts. The term "plant" also comprises trees, fruits, vegetables, flowering plants, herbs, bushes, vines, grasses, vines, mosses, and ferns.

As used herein, the "shoots and foliage" of a plant are to be understood to be the shoots, stems, branches, leaves and other appendages of the stems and branches of the plant after the seed has germinated, including the roots of the plant. The shoots and foliage of a plant are understood to be those parts of the plant that have grown from the seed and/or shoots or other parts of a "mother" plant.

As used herein, the "region of the seed" is to be understood to be that region within one inch of the seed.

In certain embodiments, the spray mixtures of the invention comprise one or more salts of boric acid selected from the group consisting of alkali metal salts of boric acid.

The spray mixtures of the invention may comprise of boric acid. The spray mixtures of the invention may comprise borax.

In certain embodiments, the spray mixtures of the invention preferably comprise an alkyl glucoside, borax and orange oil. The alkyl glucoside may be a nonionic surfactant.

In certain embodiments, the spray mixtures of the invention further comprise one or more agents selected from the group consisting of insecticides, fungicides, miticides, herbicides, acaricides, fertilizers, nutrients, and plant growth regulators.

In certain embodiments, the invention is directed to methods of controlling pests on plants or crops including transgenic or nontransgenic plants comprising application of a spray mixture by the methods of the claimed invention to any plant or crop to thereby control the pests. In certain embodiments, the pests to be controlled are selected from the group consisting of insects, mites, fungi and nematodes.

### BRIEF DESCRIPTION OF THE DRAWINGS

Figure 1 shows a dosage response curve for the control of powdery mildew severity on Chardonnay leaves after 9 sprays.
Figures 2A and 2B show coverage and runoff of spray mixtures applied at different volumes per hectare.

### DETAILED DESCRIPTION

The active mixture has to be diluted to produce the spray mixture. The composition components of the spray mixture can be added all together, or the components could be added separately. As diluents for example water can be used.

The concentration of the active mixture in the spray mixture ranges from 2 vol% to 35 vol% based on the volume of the spray mixture.

The active mixtures of the invention may comprise from 6 vol% to 35% vol%, preferably 10 vol% to 30 vol% high terpene containing oils such as but not limited to citrus oil. In a preferred embodiment, the active mixtures of the invention may comprise 8 vol% to 20 vol%, preferably 12 vol% to 22 vol% , preferably 15 vol% and most preferably 12% citrus oil.

In a first embodiment the active mixtures of the present invention may be a pesticide and in a second embodiment the active mixtures of the present invention may be an adjuvant.

The active mixtures of the invention may comprise 0.5 vol% to 5 vol% boric acid. In a preferred embodiment the active mixture comprises 2.1 vol% boric acid.

The active mixture of the present invention can be in form of a liquid; suspension; emulsion; emulsifiable concentrate or slurry of particles in an aqueous medium. The spray mixture of the present invention to be applied in form of micro-droplets is made of an active mixture, which is in form of said liquids, emulsifiable concentrates or suspensions. The emulsifiable concentrates or emulsions of the active mixture may be prepared by dissolving the active mixture in an organic solvent optionally containing a wetting or emulsifying agent and then adding the dissolved product to water which may also contain a wetting or emulsifying agent. Suitable organic solvents are aromatic solvents such as alkylbenzenes and alkylnaphthalenes, ketones such as cyclohexanone and methylcyclohexanone, chlorinated hydrocarbons such as chlorobenzene and trichlorethane, and alcohols such as benzyl alcohol, furfuryl alcohol, butanol and glycol ethers.

Such liquids emulsifiable concentrates and suspension concentrates will normally contain surfactants known in the art, e.g. a wetting agent, dispersing agent, emulsifying agent or suspending agent. These agents can be cationic, anionic or nonionic agents.

Accordingly, all concentrations in the following that refer to the active mixture have to be diluted in the above described manner to arrive at the concentration used in the spray mixture.

The active mixtures of the invention may comprise 0.5 vol% to 5 vol% boric acid. In a preferred embodiment the active mixture comprises 2.1 vol% boric acid. It is preferred that the spray mixture contains boric acid in an amount as calculated from the above mentioned contents of the active mixture in the spray mixture and the preferred amount of boric acid in the active mixture. The active mixtures of the invention may further comprise one or more insecticides, fungicides, miticides, herbicides, nutrients and/or fertilizers. Preferably, the active mixture of the invention comprises 2 vol% to 65 vol% insecticides, fungicides, miticides, herbicides, nutrients and/or fertilizers. In a preferred embodiment, the active mixture of the invention may comprise 20 vol% insecticides, fungicides, miticides, herbicides, nutrients and/or fertilizers.

The pH of the active mixtures of the present invention is between 4.0 to 9.0, more preferably 6.0 to 9.0 and most preferably 7.8 to 8.0.

Other conventional inactive or inert ingredients can be incorporated into the active mixtures. Such inert ingredients include but are not limited to: conventional sticking agents, dispersing agents such as methylcellulose (Methocel A15LV or Methocel Al5C, for example, serve as combined dispersant/sticking agents for use in seed treatments), polyvinyl alcohol (e.g., Elvanol 5105), lecithin (e.g., Yelkinol P), polymeric dispersants (e.g., polyvinylpyrrolidone/vinyl acetate PVP/VA S-630), thickeners (e.g., clay thickeners such as Van Gel B to improve viscosity and reduce settling of particle suspensions), emulsion stabilizers, surfactants, antifreeze compounds (e.g., urea), dyes, colorants, and the like.

Further inert ingredients useful in the present invention can be found in McCutcheon's, vol. 1, "Emulsifiers and Detergents," MC Publishing Company, Glen Rock, N.J., U.S.A., 1996. Additional inert ingredients useful in the present invention can be found in McCutcheon's, vol. 2, "Functional Materials," MC Publishing Company, Glen Rock, N.J., U.S.A., 1996.

The spray mixture can be adapted to various applications and conditions by additives known in the art for improving the distribution, adhesive power and resistance to rain on surfaces treated with the spray mixture. These compounds (inactive or inert ingredients, conventional sticking gents, dispersing agents, methylcellulose, combined dispersant/sticking agents, polyvinyl alcohol, lecithin, polymeric dispersants, thickeners, emulsion stabilizers, surfactants, antifreeze compounds, dyes, colorants, additives for improving the distribution, adhesive power and resistance to rain) may be comprised in the active mixture. Preferably these compounds are limited to an amount of 2 vol% to 20 vol% with respect to the active mixture. Without being bound by theory it is believed that in a large droplet, the amount of surfactant contained therein is large, and the circumference:volume relation is much less than with a very fine droplet. In other words, the surfactant molecules repel each other and move towards the circumference of the droplet. Due to the circumference:volume relation occur the surfactant molecules at the circumference of a large droplet at a much higher concentration as they are sourced from a larger volume. Therefore, the chance to cause phytotoxicity is much higher. In the case of the small droplets, there is less chance of a phytotoxic concentration accumulating at the circumference of a droplet. Fine droplets therefore spread the same amount of surfactants more evenly in lower concentrations over the plant surface whereas large droplets tend to lead to high concentrations in certain areas and lower concentrations in other areas. These high concentrations may lead to phytotoxic reactions, necessitating the initial limiting of the concentrations of product to safe levels.

The present invention is based in part on the finding that at lower spray volumes of spray mixture the efficacy of the spray mixture is related to the amount of active mixture used per area unit. Therefore, in order to apply an effective amount of active mixture in a low volume, the concentration of active mixture in the spray mixture must be increased. Surprisingly, despite the high concentration of active mixture in the spray mixture no phytotoxicity occurs when the spray mixture is applied according to the method of the present invention particularly in form of micro-droplets and preferably at a low volume per hectare. Moreover, the method disclosed by the present invention provides a better coverage of the leaves despite the low volume of spray mixture applied per area unit and furthermore less runoff of the spray mixture from the leaves occurs.

The concentration of the active mixture in the spray mixture depends on the volume to be sprayed. For example, in the case of 10 l/ha of spray mixture being applied, 25 vol% active mixture may be used based on the volume of the spray mixture. Usually, the concentration of the active spray mixture in the spray mixture is between 2 vol% to 35 vol%.

Preferably, the volume of the spray mixture which is sprayed is up to 500 l/ha, more preferably up to 200 l/ha, even more preferably up to 45 l/ha and most preferably 10 l/ha. Even more preferred is that the volume of the spray mixture which is sprayed is 5 to 500 l/ha, 5 to 200 l/ha, more preferably 5 to 45 l/ha and most preferably 5 to 10 l/ha.

The methods of applying spray mixtures disclosed herein protect plants and/or crops against pests and have reduced phytotoxicity when compared with spray mixtures applied using conventional spraying systems which deliver the spray mixtures as high volume sprays, e.g. 750 to 10 000 l/ha.

The present invention is based in part on the finding that applying an active mixture at a high concentration in a low volume of spray mixture reduces the phytotoxicity effect of the spray mixture. The present invention provides a method of applying a spray mixture at low spray volume and comprising a high concentration of an active mixture. The method of the present invention comprises forming micro-droplets of a spray mixture and applying the micro-droplets of the spray mixture to a plant. The method of the present invention of applying a low volume of a spray mixture comprising a high concentration of an active mixture may have little, or no, phytotoxicity effect as compared to conventional methods of applying spray mixtures at a high concentration of active mixture. The invention furthermore provides better coverage of the leaves with spray mixture and less runoff of the spray mixture occurs.

The micro-droplets may be formed by a combination of different factors such as the components of the spray mixture and the forces applied on the spray mixture. Components of the spray mixture that may contribute to the formation of the micro-droplets include but are not limited to the oils and surfactants. Forces applied on the spray mixture may include shearing forces for mixing the spray mixture, pressure for squeezing the spray mixture through a narrow constriction, or energy for dispersing the spray mixture into fine droplets. The micro-droplets of the spray mixture may be formed prior to applying to the plants. The micro-droplets also may be formed concurrently with applying the spray mixture to the plant. For example, the micro-droplets of the spray mixture may be formed through an electrostatic and/or electrodynamic spray system as the spray mixture is applied to the plant. Applying the spray mixture as micro-droplets to the plants enables the application of a low volume of spray mixture per area unit comprising a high concentration of active mixture.

The micro-droplets of spray mixture disclosed herein may be applied in a number of ways. For example, they can be applied directly to the foliage of a plant or to seeds. Therefore, the application can be to any part of the plant or seed including the foliage, stems, branches or roots, or to the seed before it is planted, or to paddy water or to hydroponic culture systems.

The micro-droplets of spray mixture may be applied using methods including but not limited to spraying, wetting, misting, fogging, dampening, drizzling, aerial crop wetting via airplane or helicopter.

Lower volume sprayers such as but not limited to electrostatic and/or electrodynamic sprayers and foggers are able to supply fine mist sprays that provide very efficient coverage of the surface of plants. The volume of the spray mixture may be as low as 10 l/ha up to 500l/ha.

These spray methods provide very efficient "wrap-around" application of the sprayed material to the plant surface or onto any pest that is present.

The micro-droplets of spray mixture may be applied as sprays in the form of aerosols wherein the spray mixture is held in a container under pressure of a propellant, e.g. fluorotrichloromethane or dichlorodifluoromethane.

The present invention provides a method of reducing phytotoxic effects of a spray mixture comprising the application of a low volume of a spray mixture which comprises a high concentration of an active mixture to a plant and/or crop, wherein the phytotoxic effect is reduced as compared to applying a spray mixture with a high volume and comprising a low concentration of active mixture. The spray mixture containing the active mixture is applied in the form of micro-droplets. The micro-droplets have a volume median diameter distribution as defined earlier herein.

### ACTIVE MIXTURES

The method of the present invention provides for the delivery of a low volume per area unit of various spray mixtures to plants, wherein the spray mixtures comprise a high concentration of active mixture.

The active mixtures and/or spray mixtures in the present invention comprise terpene containing oils. Examples of terpene containing oils, comprise citrus oils, pine oils, and other naturally occurring oils of plants that comprise on ore more terpene. These terpene containing oils have a total content of terpenes of 50 vol% or more. Citrus oils comprise orange oil, lemon oil, lime oil, grapefruit oil and tangerine oil.

The active mixtures and/or spray mixtures in the present invention comprise surfactants. Examples of surfactants include but are not limited to nonionic surfactants, anionic surfactants, cationic surfactants, and amphoteric surfactants.

Nonionic surfactants comprise agents such as sorbitan monolaurate, sorbitan monopalmitate, sorbitan sesquioleate, sorbitan trioleate, polyoxyethylene sorbitan monolaurate, polyoxyethylene sorbitan monostearate, polyethylene glycol monooleate, polyethylene glycol alkylate, polyoxyethylene alkyl ether, polyglycol diether, lauroyl diethanolamide, fatty acid iso-propanolamide, maltitol hydroxy fatty acid ether, alkylated polysaccharide, alkyl glucoside, sugar ester, oleophillic glycerol monostearate, self-emulsifiable glycerol monostearate, polyglycerol monostearate, polyglycerol alkylate, sorbitan monooleate, polyethylene glycol monostearate, polyoxyethylene sorbitan monooleate, polyoxyethylene cetyl ether, polyoxyethylene sterol, polyoxyethylene lanolin, polyoxyethylene bees wax, and polyoxyethylene hydrogenated castor oil.

The alkyl glucosides are a class of non-ionic surfactants, which comprises long chain alkyl glucosides or polyglucosides, that are the condensation products of (a) a long chain alcohol containing from 6 to 22, and from 8 to 14 carbon atoms, with (b) glucose or a glucose-containing polymer. The alkyl glucosides have 1 to 6 glucose residues per molecule of alkyl glucoside. In one embodiment, a glucoside is decyl glucoside, which is the condensation product of decyl alcohol with a glucose polymer and is available commercially from Henkel Corporation of Hoboken, N.J. under the tradename, "Plantaren 2000." In another embodiment, the alkyl glucoside is AKZO-NOBEL AG 6210.

Anionic surfactants comprises agents such as sodium stearate, potassium palmitate, sodium cetyl sulfate, sodium lauryl phosphate, sodium polyoxyethylene lauryl sulfate, triethanolamine palmitate, polyoxyethylene sodium lauryl phosphate, and sodium N-acyl glutamate. Calfoam® ES-603 is an example of an anionic surfactant. It is a clear liquid sodium salt of alcohol ethoxy sulfate with a faint alcohol odor. This biodegradable surfactant is pourable and pumpable at ambient temperatures and functions as a flash foamer and foam stabilizer in aqueous systems.

Cationic surfactants comprise agents such as stearyl dimethylbenzyl ammonium chloride, stearyl trimethyl ammonium chloride, benzalkonium chloride, and laurylamine oxide.

Amphoteric surfactants comprise agents such as alkylaminoethyl glycine chloride and lecithin.

The active mixtures and/or spray mixtures in the present invention may also comprise one or more salts of boric acid. Salts of boric acid used in the spray mixture of the present invention may comprise any of the alkali earth metal salts of boric acid with any amount of hydration.

The term "borax" as used herein refers to a number of closely related minerals or chemical compounds that differ in their crystal water content and commercially sold borax is usually partially dehydrated. Preferably, borax as use in herein comprises anhydrous borax (Na₂B₄O₇), Borax pentahydrate (Na₂B₄O₇·5H₂0), Borax decahydrate (Na₂B₄O₇·10H₂O), Na₂[B₄O₅(OH)₄]8H₂0, since borax contains the [B₄O₅(OH)_{4]}²⁻ion, salt of boric, boric acid and other borates. More preferably the borax decahydrate is used in the present invention.

An example of a spray mixture comprising terpene containing oils is an orange oil spray mixture.

Said orange oil spray mixture includes water, sulfonic acid, caustic soda, urea, sodium lauryl sulfate (60%), non-ionic linear alcohol ethoxylate, sodium C₁₄₋₁₆ olefin sulfonate, orange oil, methyl parabene, butylated hydroxytoluene, sodium tetraborate decahydrate, and propyl parabene.

The active mixtures and/or spray mixtures in the present invention may also comprise one or more other agents. For example, the agent may be an insecticide, a fungicide, an herbicide, a miticide, a nematicide, an acaricide, an insect pheromone, or a combination thereof. The agent may be an adjuvant to enhance the pesticide activity of the pesticide or other crop protection chemicals. The agent may be a fertilizer or a nutrient such as nitrogen-, potassium- or phosphorus-containing fertilizers. The agent may be a plant growth regulators or phytohormones. All these agents can be comprised in the active mixture and/or spray mixtures at any combination, all together or alone.

Seaweed extracts may be used as fertilizers. Seaweed is a loose colloquial term encompassing macroscopic, multi-cellular, benthic marine algae. The term comprises some members of the red, brown and green algae. Seaweed may belong to one of several groups of multi-cellular algae: the red algae, green algae, and brown algae. As these three groups are not thought to have a common multi-cellular ancestor, the seaweeds are a paraphyletic group. In addition, some tuft-forming blue-green algae (Cyanobacteria) are sometimes considered as seaweeds.

Micronutrients required by plants can be divided into two groups, primary and secondary nutrients. The primary nutrients are nitrogen, phosphorus and potassium. Plants use large amounts of these nutrients for their growth and survival. The secondary nutrients are calcium, magnesium and sulfur.

There are at least eight micronutrients essential to plant growth and health that are only needed in very small quantities. These are manganese, boron, copper, iron, chlorine, cobalt, molybdenum, and zinc. Some also consider sulfur a micronutrient. Though these are present in only small quantities, they are all necessary for plant growth.

**Table 1: List of minimum and maximum elemental contents in liquid fertilizers**

| Ingredient | Ingredient [Symbol] | Minimum [vol%] | Maximum [vol%] |
|---|---|---|---|
| Nitrogen | N | 5.1 | 9.6 |
| Phosphorus | P | 1 | 6.3 |
| Potassium | K | 3.2 | 8.3 |
| Calcium | Ca | 5.66 | 19.5 |
| Magnesium | Mg | 0.9 | 5.5 |
| Boron | B | 0.02 | 11.5 |
| Iron | Fe | 0.1 | 7 |
| Manganese | Mn | 0.05 | 9 |
| Molybdenum | Mo | 0.0005 | 0.028 |
| Zinc | Zn | 0.05 | 12 |
| Copper | Cu | 0.05 | 14 |
| Sulphur | S | 1 | 1.24 |

| | | | |
|---|---|---|---|
| * It is preferred that the spray mixture contains these ingredients in an amount as calculated from the above mentioned contents of the active mixture in the spray mixture and the preferred amount of these ingredients in the active mixture. | | | |

The pesticides used in the methods of the present invention may comprise terpene containing oils. The terpene containing oils may be a citrus oil selected from the group containing orange oil, lemon oil, lime oil, grapefruit oil, and tangerine oil. The active mixtures and/or spray mixtures of the present invention may comprise one or more terpene containing oils and one or more surfactants. The surfactants may be selected from the group consisting of nonionic surfactants, anionic surfactants, cationic surfactants, and amphoteric surfactants.

In addition to the terpene oils and surfactants, the active mixtures and/or spray mixtures of the present invention may further comprise borax, a fertilizer, a micronutrient, an insecticide, a fungicide, an herbicide, a nematicide, an acaricide, or a combination thereof. The active mixtures and/or spray mixtures of the present invention may also comprise propylene glycol, sodium lauryl sulfate, secondary alcohol ethoxylate, urea, ethylenediaminetetra acetic acid, methyl parabene, ethanol, and a combination thereof.

### PLANT VARIETIES AND CROPS

The methods of the present invention may be used for agricultural and horticultural purposes. The methods described herein may be used to protect plants and crops including their seeds, roots, and/or the above-ground parts of field, forage, plantation, glasshouse, orchard or vineyard crops, grasses, turf, ornamentals, plantation, household or forest trees, against pests. The methods described herein have reduced phytotoxic effect as compared to delivering pesticides in high volumes such as conventional methods of spraying and misting.

The plants or crops that may be treated using the methods disclosed herein can be any species of plant or crop. The plant or crop species may be those that are agronomically or horticulturally important. In particular, the plant species may be corn, peanut, canola/rapeseed, soybean, curcubits, crucifers, cotton, beets, rice, sorghum, sugar beet, wheat, barley, rye, sunflower, tomato, sugarcane, tobacco, oats, as well as other vegetable and leaf crops. In certain embodiments, the crops or plant species may include vineyards, citrus, pecans, almonds, all stone fruits, apples, pears, bananas, lawns, turf, home and garden varieties of plants.

The plants may also be any ornamental plants, comprising rose, tulip, violet, daffodil, gladiolus, lavender, lilies, narcissus, orchid, hyacinth, chrysanthemum, crocus, iris, peonies, zephyranthes, carnation, anthurium, gloxinia, azalea, poinsettia, ageratum, bamboo, begonia, camellia, dahlia, dianthus, geranium, impatiens, lilies of the valley and lobelia.

In one embodiment of the invention, the plant and/or crop is a nontransgenic plant or crop.

In another embodiment of the invention, the plant and/or seed are a transgenic plant or seed from which a transgenic plant can grow. The transgenic plants and seeds may be engineered to express a desirable characteristic and, in particular, to have at least one heterologous gene encoding for the expression of a protein that has pesticide activity and, in particular, has insecticidal activity. The heterologous gene in the transgenic plant or seed of the present invention can be derived from a microorganism such as *Bacillus, Rhizobium, Pseudomonas, Serratia, Trichoderma, Clavibacter, Glomus, Gliocladium* and *mycorrhizal fungi.* In particular, the present methods are especially beneficial when the heterologous gene is one that is derived from a *Bacillus* microorganism and the protein is active against corn rootworm.

The present methods are especially beneficial when the heterologous gene is one that is derived from a Bacillus microorganism and the protein is active against European corn barer. An example of a Bacillus microorganism is *Bacillus thuringiensis.* The heterologous gene may encode a modified Cry3Bb delta-endotoxin derived from *Bacillus thuringiensis.*

The method of the present invention is particularly suitable for the treatment of powdery mildew *(Uncinula necator)* and Asian Citrus Psyllid (*Diaphorina citri).*

### EXAMPLES

### Example 1: Active mixture

The spray mixture to be applied to the plants is prepared from an active mixture (Table 2) by dilution as described in the following:

If the active mixture is a pesticide it is used as an insecticide, fungicide or miticide. In this case the active mixture is diluted in water and used in a concentration between 2 vol% up to 35 vol% in the spray mixture.

If the active mixture is an adjuvant it is used in combination with other insecticides, fungicides, miticides, herbicides, nutrients or fertilizers. In this case the active mixture is combined in a tank with insecticides, fungicides, miticides, herbicides, fertilizers and nutrients. Subsequently, this combination is diluted so that the concentration of the active mixture in the spray mixture is between 2 vol% up to 35 vol% tank mixes.

The active mixture was prepared by using the following ingredients.

**Table 2**

| Name | | Chemical name | Nominal concentration [vol%] |
|---|---|---|---|
| Water | | Water | 62.4 |
| BioSoft S-100 | | Sulfonic Acid (Benzenesulfonicacid, dodecyl-) | 10.59 |
| NaOH | | Caustic soda (Sodium hydroxide (NaOH) | 1.37 |
| Urea | | Urea | 0.89 |
| Steol CS-460 | | SODIUM LAURYL SULFATE (60%) | 7.13 |
| Tomadol/Serdox 1-7 or 9 | | Non Tonic Linear Alcohol Ethoxylate | 8.448 |
| Bio-Terge AS-40 | | Sodium C14-16 Olefin Sulfonate | 1.78 |
| Orange Oil | | Cold pressed orange oil | 6.00 |
| Methylparabene (Nipagin M) | | Methyl Parabene | 0.20 |
| BHT | | Butylated hydroxytoluene | 0.10 |
| US Borax | | Sodium tetraborate decahydrate | 0.99 |
| Propylparabene | | Propyl Parabene | 0.10 |
| Color FD & C | | | |
| | Blue | | 0.001 |
| | Yellow | | 0.001 |
| Citric Acid | | | as needed for pH as specified |
| **Total Volume** | | | **100.00** |

### Example 2: Efficacy of active mixture on powdery Mildew at various concentrations of the active mixture in the spray mixture and application of various volumes of the spray mixture

This example illustrates that at low spray volumes, the amount of active mixturet being sprayed per ha is important to obtain control of the pest and not the concentration of the active mixture. This surprise finding opens the way for lowering the spray volumes even further except for the fact that an increase of phytotoxicity was expected with a concomitant increase of concentration

In this example, the efficacy of the spray mixture against powdery mildew *(Uncinula necator)* on Chardonnay grapes was evaluated. The spray mixture was applied with various volumes and comprising various concentrations/amounts of active mixture. The active mixture disclosed in Example 1/Table 2 was used for making up the spray mixture. The treatments and results of this trial are shown in Table 3 and 4. The trial was specifically designed to test lower volume applications of spray mixture with an effective sprayer. Therefore, various volumes per hectare of spray mixture comprising various amounts/concentrations of active mixture were sprayed. Then the effect of volume and concentration was compared of those trials where the same amount of active mixture per hectare has been applied in different volumes of spray mixture. Accordingly, when lower volumes of spray mixture were used, a higher concentration of the active mixture is needed to apply the same amount active mixture per hectare.

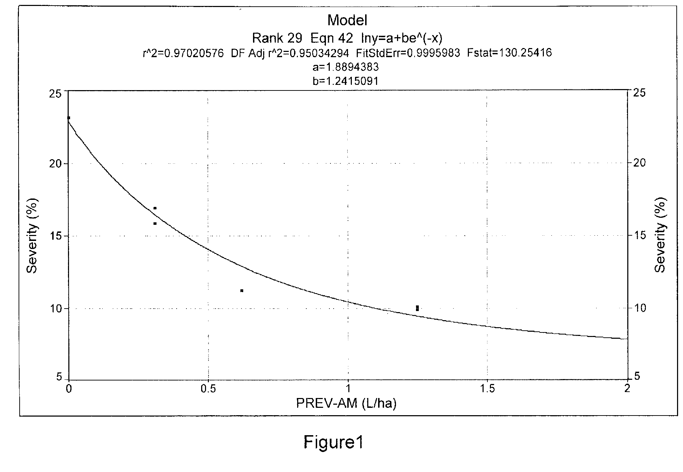

Treatment Schedule: Wine grapes, cv. Chardonnay, in Somerset West, Western Cape, South Africa were treated with the active mixture to protect them against powdery mildew as described below. Examples of active mixtures that could typically be used to prepare the spray mixture, include, but are not limited to PREV-B2™, PREV-AM™ or BORIGAN™. The active mixture used in figure 1 was PREV-AM™.

The volumes used and amounts applied to the grape vines are indicated in table 3. The 500 l/ha volume at 0.25% serve as a reference point for lower volume application of conventional sprays to be compared with the micro-droplet applications of the 125 l/ha and 250 l/ha.

**Table 3: Treatments**

| No. | Treatment [vol% active mixture contained in l/ha spray mixture applied] | l/ha active mixture |
|---|---|---|
| 1 | Untreated Control (UTC) | 0 |
| 2 | 0.125 vol% X 250 l/ha | 0.31 |
| 3 | 0.25 vol% X 125 l/ha | 0.31 |
| 4 | 0.25 vol% X 250 l/ha | 0.62 |
| 5 | 0.25 vol% X 500 l/ha | 1.25 |
| 6 | 0.5 vol% X 250 l/ha | 1.25 |

The grapes were sprayed every 10 days for four months at the concentrations and volumes indicated in Table 3. An untreated control (UTC) as reference received no sprays at all.

Application equipment: The spray mixture was applied to the grape vines with a low volume sprayer of the Mounted Sprayer type produced by CIMA.

Post Spray Assessment: The powdery mildew infection on 40 leaves per experimental plot was expressed as percentage of leaf area affected on the top of the leaves. Very little powdery mildew occurred on the clusters and no evaluation was made.

Statistical layout: Randomized Block layout with 6 treatments replicated in each of 4 blocks. Each experimental plot consisted of 14 vines with 7 or more vines on each side to serve as guard vines. Each experimental plot had 2 guard rows on both sides resulting in 4 guard rows being present between experimental plots.

Statistical analysis: The means of the numbers for each value obtained were subjected to an analysis of variance and the treatment means were compared using Student's t-LSD at a 5% (p=0.05) significance level with SAS version 8.2. (p≥0.05 indicates not significant, p<0.05 indicates significant)

The results are presented in Table 4 and Figure 1. From the results it was clear that there was no statistical significant difference between treatments where the same volume of spray mixture was sprayed. Curves were fitted to the data based on volume to find the best fit for a dosage response curve. The best-fitting curve that had a 97% correlation with the amount of active mixture per hectare is presented under results.

**Table 4: Powdery mildew severity for different treatments on Chardonnay leaves after 9 sprays.**

| No. | Treatment (vol% of active mixture contained in l/ha spray mixture applied) | l/ha active mixture | % leaf area affected | Phytotoxicity¹ |
|---|---|---|---|---|
| 1 | UTC | 0 | 23.18^{a} | no |
| 2 | 0.125% X 250l/ha | 0.31 | 16.93^{b} | no |
| 3 | 0.25% X 125 l/ha | 0.31 | 15.88^{b} | no |
| 4 | 0.25% X 250 l/ha | 0.62 | 11.25^{c} | no |
| 5 | 0.25% X 500 l/ha | 1.25 | 9.90^{d} | no |
| 6 | 0.5% X 250 l/ha | 1.25 | 10.10^{d} | no |

| | | | | |
|---|---|---|---|---|
| Statistics: a,b,c: Means followed by a common letter do not differ significantly, p≥0.05. Means not followed by a common letter differ significantly, p<0.05. | | | | |

All values at different amounts of the active mixture were statistically different from each other as indicated in Table 4. Where the same amount per hectare of active mixture was applied the differences were not significant, independently of the different volumes of spray mixture and also independently from the factor of dilution of the active mixture in the spray mixture. Statistical data from the curve in Figure 1 also indicated that the infection differed significantly between the different amounts of active mixture (l/ha) applied as well as the untreated control (UTC).

Conclusions: In this trial, it was shown that at low volumes it is not the concentration of active mixture that is related to control of powdery mildew, but the amount of active mixture that was applied per hectare. In Figure 1 it is shown that the severity of powdery mildew depends on the amount of active mixture sprayed, independently whether this amount is applied as spray mixture with a higher volume and lower concentration or lower volume and higher concentration. (Compare 1.25 l/ha of active mixture applied at either 0.25 vol% in a total of 500 l/ha spray mixture or 0.5 vol% in a total of 250 l/ha spray mixture. Also compare 0.31 l/ha active mixture applied at either 0.125 vol% in a total of 250 l/ha spray mixture or 0.25 vol% in a total of 125 l/ha spray mixture.) Therefore when lower volumes are used, a higher concentration of the active mixture is needed to apply the same amount active mixture.

Considering that the spraying intervals were longer than it would normally be the case, the control obtained by the application of 1.25 l/ha active mixture was good and had the spray intervals been as planned, this would have been sufficient for control of powdery mildew under the climatic conditions. From the extrapolation of the graph of figure 1 it is however clear that 2 to 3 l/ha would have provided better control. Considering that the disease pressure in this location is generally low, in the event of higher disease pressure, 2 to 3 l/ha active mixture may be used. In case of 125 liter spray volume spray mixture the concentration of the active mixture would accordingly be 1.6 vol% to 2.4 vol%. This becomes even more pronounced at lower volumes. At high conventional spray volumes of 750 to 1500/ha these concentrations of spray mix would be considered a risk for phytoxicity.

In the event lower spray volumes are used, such as with a fogger application (as illustrated in Example 3), the same amount per hectare would be applied in higher concentrations than 2.4 vol%, such as 7.5 to 22.5 vol%, or 10 to 20 vol% or 12 to 18 vol% or even 15 vol%.

It can be concluded that within the parameters of the volumes and concentrations applied in the trial, the powdery mildew control obtained is best correlated with the amount of active mixture applied. Provided an efficient sprayer is used, the same amount per hectare may be sprayed at lower or higher volume with a corresponding higher or lower concentration.

The efficacy of the spray mixture is related to the amount of active mixture comprised therein and not to the concentration as previously expected and disclosed. Therefore, it is shown in this experiment that the used method allows to spray a very low volume of spray mixture and still an unchanged control of powdery mildew can be achieved as long as the amount of active mixture applied is the same.

### Example 3: Dyna Fog low volume spray with different pesticides

This example illustrates the surprising aspects of the present invention.

It illustrates that even at the application of lower spray volumes at a very high concentration of active mixture in the spray mixture but with the application method as claimed, i.e. micro-droplets, there was no phytotoxicity. Such a concentration at higher spray volumes such as in example 2 would have resulted in severe phytotoxicity.

In this Example, different spray mixtures were sprayed with Dyna Fog AG-Mister LV-8™ low volume sprayer on orange trees and the counts of nymphs and eggs of Asian Citrus Psyllid (*Diaphorina citri)* (ACP) per single shoot of a new growth flush was evaluated. The colonization with ACP of the orange trees occurred by means of natural infestation in the orchard. The active mixture in this experiment was an adjuvant. Therefore, the applied spray mixtures comprised the active mixture and in each case different additional pesticides. Examples of active mixtures that are adjuvants and that may be used comprise WETCIT™, POLICIP™, CITRI-KING™ In all treatments 9.34 I of active mixture were applied in 42 l/ha spray volume of the spray mixture. Therefore, the active mixture was applied at a high concentration (22.2 vol%) either alone or in combination with different pesticides as indicated. Pretreatment count was taken a day prior to the application of the treatment. Application amounts and treatment results are presented in Table 5 below.

**Table 5: Results for control of Asian Citrus Psyllid following spraying of different pesticides using a low volume sprayer**

| Treatment | Amount per Hectare | Pre-Count numbers | | 11 days post Treatment numbers | | 20 days post Treatment numbers | | 26 days post Treatment numbers | |
|---|---|---|---|---|---|---|---|---|---|
| | | Eggs/flush | Nymphs /flush | Eggs/flush | Nymphs/flush | Eggs/flush | Nymphs/flush | Egg /flush | Nymphs/flush |
| Danitol + CITRI-KING | 1.4 kg 9.34 liters | 1.1 | 0.06 | 0.13^{b} | 0^{b} | 4.6^{b} | 0.3^{b} | 0^{a} | 9.1^{ab} |
| Agrimek + CITRI-KING | 1.4 kg 9.34 liters | 1.1 | 0.06 | 1.51^{b} | 0^{b} | 3.3^{b} | 1.3^{ab} | 2.2^{a} | 11.7^{a} |
| Malathion + CITRI-KING | 2.24 kg 9.34 liters | 1.1 | 0.06 | 0^{b} | 0^{b} | 8.6^{ab} | 1.6^{ab} | 1.7^{a} | 5.2^{bc} |
| Baythroid XL + CITRI-KING | 168g 9.34 liters | 1.1 | 0.06 | 0^{b} | 0.7^{b} | 2.7^{b} | 0.9^{ab} | 1.3^{a} | 1,8^{c} |
| Micromite + CITRI-KING | 437 g 9.34 liters | 1.1 | 0.06 | 0.9^{b} | 0^{b} | 2.2^{b} | 0.7^{ab} | 0.8^{a} | 4.5^{bc} |
| Dimethoate + CITRI-KING | 2.24 kg 9.34 liters | 1.1 | 0.06 | 0.13^{b} | 0^{b} | 0.7^{b} | 1.3^{ab} | 0.2^{a} | 0.6^{c} |
| Lorsban + CITRI-KING | 1.4 kg 9.34 liters | 1.1 | 0.06 | 0^{b} | 0^{b} | 5.5^{b} | 5.2^{a} | 0.4^{a} | 0.4^{c} |
| CITRI-KING | 9.34 liters | 1.1 | 0.06 | 0.3^{b} | 0.1^{b} | 7.8^{ab} | 3.8^{ab} | 0.1^{a} | 1.2^{c} |
| Untreated control | | 1.1 | 0.06 | 6.2^{a} | 1.8^{a} | 12.8^{a} | 3.8^{ab} | 0.9^{a} | 7.8^{ab} |

| | | | | | | | | | |
|---|---|---|---|---|---|---|---|---|---|
| Statistics: a,b,c: Compare in the same column. Means followed by a common letter do not differ significantly, p≥0.05. Means not followed by a common letter differ significantly, p<0.05. | | | | | | | | | |

The surprising finding was that the spray mixture was not phytotoxic despite of the high concentration of the active mixture comprised. No phytotoxicity was observed despite the high concentration of active mixture in the spray mixture of 22.2 vol%.

Further examples illustration the invention are:
- Large Pecan and Citrus trees: Low volume 200 - 500l/ha; high volume 2 000 - 10 000 l/ha
- Grapes: Low volume 30 - 125 l/ha; high volume 750 - 1500 l/ha
- Cotton plants after emergence: low volume 5 l/ha; high volume 100 - 200 l/ha

Conclusions: It can be concluded that all pesticides sprayed by using the Dyna Fog with a volume of 42 l/ha (low volume) provided significant reductions of ACP nymphs and eggs for the first 2 weeks after application. Starting from the 3^{rd} week post treatment, ACP started to re-infest the treated plots. But despite this re-infestation, lower ACP numbers were still observed in some treatments compared with the untreated control.

### Example 4: Water rate and runoff using a motorized backpack sprayer

In this Example, low volume sprays of spray mixtures were applied to grape leaves to illustrate coverage. Low volumes of spray mixture where sprayed to illustrate the coverage obtained on a Chardonnay grape leaf. The spray mixture contained as active mixture WETCIT™ at a concentration of 0.1 vol% and additionally a yellow fluorescent pigment (South Australian Research and Development Institute) at 1.5 vol%. Accordingly, the active mixture in this experiment was an adjuvant at 0.1 vol%. The dye reflects the ultra violet light beam shone directly onto it and shows how evenly the product associated with it is applied.

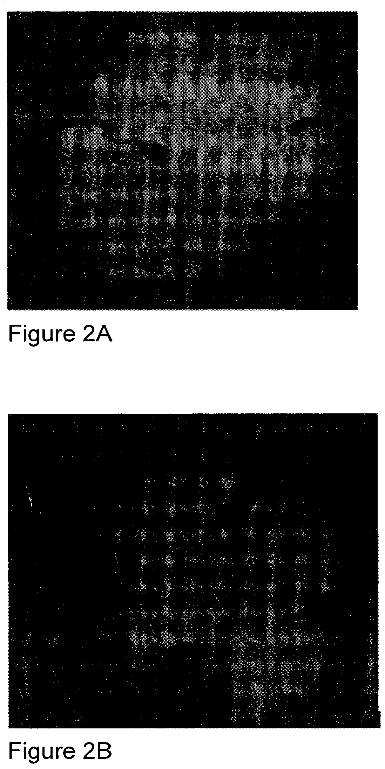

Figures 2A and 2B show coverage and runoff of the spray mixture at specific volume in liter per hectare (l/ha). In figure 2A the spray mixture was applied with a volume of 234 l/ha. In figure 2B the spray was applied with a volume of 140 l/ha. The spray mixture applied with a volume of 140 l/ha showed excellent coverage on top and bottom of leaf despite the lower volume of spray mixture applied. Furthermore less runoff and still no phytotoxic effect was observed despite an higher concentration of active mixture in the spray mixture applied (same rates per hectare in lower water volumes). Spraying the lower volume achieves the same or even better leave coverage when compared with spraying the higher volume.

## Claims

1. A method of applying a spray mixture in an amount of up to 500 l/ha, the spray mixture comprising an active mixture, whereby the concentration of active mixture is between 2 vol% to 35 vol% based on the volume of the spray mixture and wherein the active mixture comprises one or more surfactants in a concentration of 10 vol% to 35 vol% based on the volume of the active mixture, and terpene containing oils in an concentration of 6 vol% to 35 vol%, based on the volume of the active mixture and wherein the spray mixture is applied in the form of micro-droplets having a volume median diameter of 60 µm to 280 µm when measured according to the ASABE S-572 Droplet Standard.

2. The method according to claim 1 wherein the spray mixture is applied at a spray volume up to 200 l/ha with a concentration of the active mixture between 2 to 35 vol%.

3. The method according to any of claims 1 or 2 whereby the concentration of active mixture is between 8 vol% to 20 vol%, based on the volume of the spray mixture.

4. The method according to any of claims 1 or 2 whereby the concentration of active mixture is between 12 vol% to 22 vol%, based on the volume of the spray mixture.

5. The method according to any of claims 1 or 2 whereby the concentration of the terpene containing oils in the spray mixture is 0.2 to 10 vol%, preferably 2 to 7 vol% and most preferably 3 to 6 vol%.

6. The method according to any of the preceding claims where the active mixture is a pesticide.

7. The method according to any of the preceding claims where the active mixture is an adjuvant.

8. The method according to any of the preceding claims, wherein the spray mixture is applied to the plant via an electrostatic and/or electrodynamic sprayer or by using a fogger.

9. The method according to any one of the preceding claims, wherein the terpene containing oils are a citrus oil.

10. The method according to claim 9, wherein the terpene containing oils contain at least 50 percent terpenes and are a citrus oil.

11. The method according to claim 9 or 10, wherein the citrus oil is selected from the group consisting of orange oil, lemon oil, lime oil, grapefruit oil and tangerine oil.

12. The method according to any one of the preceding claims, wherein the spray mixture and/or active mixture further comprises borax, a fertilizer or micro-nutrients.

13. The method according to any one of the preceding claims, wherein the spray mixture and/or active mixture further comprises an insecticide, fungicide, herbicide, nematicide or acaricide.

14. The method according to any one of the preceding claims, wherein the spray mixture and/or active mixture comprises one or more surfactants selected from the group consisting of nonionic surfactants, anionic surfactants, cationic surfactants, and amphoteric surfactants.

15. The method according to claim 14, wherein the nonionic surfactants is selected from sorbitan monolaurate, sorbitan monopalmitate, sorbitan sesquioleate, sorbitan trioleate, polyoxyethylene sorbitan monolaurate, polyoxyethylene sorbitan monostearate, polyethylene glycol monooleate, polyethylene glycol alkylate, polyoxyethylene alkyl ether, polyglycol diether, lauroyl diethanolamide, fatty acid iso-propanolamide, maltitol hydroxy fatty acid ether, alkylated polysaccharide, alkyl glucoside, sugar ester, oleophillic glycerol monostearate, self-emulsifiable glycerol monostearate, polyglycerol monostearate, polyglycerol alkylate, sorbitan monooleate,

16. The method according to claim 14, wherein the anionic surfactants is selected from sodium stearate, potassium palmitate, sodium cetyl sulfate, sodium lauryl phosphate, sodium polyoxyethylene lauryl sulfate, triethanolamine palmitate, polyoxyethylene sodium lauryl phosphate, and sodium N-acyl glutamate or mixtures thereof.

17. The method according to claim 14, wherein the cationic surfactants is selected from stearyl dimethylbenzyl ammonium chloride, stearyl trimethyl ammonium chloride, benzalkonium chloride, and laurylamine oxide or mixtures thereof.

18. The method according to claim 14, wherein the amphoteric surfactants is selected from alkylaminoethyl glycine chloride and lecithin or mixtures thereof.

## Patentansprüche

1. Verfahren zum Anwenden einer Sprühmischung mit einer Menge von bis zu 500 l/ha, wobei die Sprühmischung eine aktive Mischung umfasst, wobei die Konzentration der aktiven Mischung zwischen 2 Vol.-% bis 35 Vol.-% beträgt, basierend auf dem Volumen der Sprühmischung, und wobei die aktive Mischung ein oder mehrere oberflächenaktive Stoffe mit einer Konzentration von 10 Vol.-% bis 35 Vol.-%, basierend auf dem Volumen der aktiven Mischung, und terpenhaltige Öle mit einer Konzentration von 6 Vol.-% bis 35 Vol.-%, basierend auf dem Volumen der aktiven Mischung, umfasst, und wobei die Sprühmischung in der Form von Mikrotröpfchen angewendet wird, die einen mittleren Volumendurchmesser von 60 µm bis 280 µm aufweisen, wenn dieser gemäß dem Tröpfchenstandard ASABE S-572 gemessen wird.

2. Verfahren nach Anspruch 1, wobei die Sprühmischung mit einem Sprühvolumen von bis zu 200 l/ha mit einer Konzentration der aktiven Mischung zwischen 2 und 35 Vol.-% angewendet wird.

3. Verfahren nach einem der Ansprüche 1 oder 2, wobei die Konzentration der aktiven Mischung zwischen 8 Vol.-% und 20 Vol.-% beträgt, basierend auf dem Volumen der Sprühmischung.

4. Verfahren nach einem der Ansprüche 1 oder 2, wobei die Konzentration der aktiven Mischung zwischen 12 Vol.-% und 22 Vol.-% beträgt, basierend auf dem Volumen der Sprühmischung.

5. Verfahren nach einem der Ansprüche 1 oder 2, wobei die Konzentration der terpenhaltigen Öle in der Sprühmischung 0,2 bis 10 Vol.-%, vorzugsweise 2 bis 7 Vol.-% und am meisten bevorzugt 3 bis 6 Vol.-% beträgt.

6. Verfahren nach einem der vorhergehenden Ansprüche, wobei die aktive Mischung ein Pestizid ist.

7. Verfahren nach einem der vorhergehenden Ansprüche, wobei die aktive Mischung ein Adjuvans ist.

8. Verfahren nach einem der vorhergehenden Ansprüche, wobei die Sprühmischung auf die Pflanze mittels eines elektrostatischen und/oder elektrodynamischen Sprühgeräts oder unter Verwendung eines Neblergeräts angewendet wird.

9. Verfahren nach einem der vorhergehenden Ansprüche, wobei die terpenhaltigen Öle ein Citrusöl sind.

10. Verfahren nach Anspruch 9, wobei die terpenhaltigen Öle mindestens 50 Prozent der Terpene enthalten und ein Citrusöl sind.

11. Verfahren nach Anspruch 9 oder 10, wobei das Citrusöl aus der Gruppe ausgewählt ist, bestehend aus Orangenöl, Zitronenöl, Limonenöl, Pampelmusenöl und Tangerinenöl.

12. Verfahren nach einem der vorhergehenden Ansprüche, wobei die Sprühmischung und/oder die aktive Mischung ferner Borax, ein Düngemittel oder Mikronährstoffe umfassen.

13. Verfahren nach einem der vorhergehenden Ansprüche, wobei die Sprühmischung und/oder die aktive Mischung ferner ein Insektizid, Fungizid, Herbizid, Nematizid oder Akarizid umfassen.

14. Verfahren nach einem der vorhergehenden Ansprüche, wobei die Sprühmischung und/oder die aktive Mischung ein oder mehrere oberflächenaktive Stoffe umfassen, die aus der Gruppe ausgewählt sind, bestehend aus nicht-ionischen oberflächenaktiven Stoffen, anionischen oberflächenaktiven Stoffen, kationischen oberflächenaktiven Stoffen und amphoteren oberflächenaktiven Stoffen.

15. Verfahren nach Anspruch 14, wobei die nicht-ionischen oberflächenaktiven Stoffe aus Sorbitanmonolaurat, Sorbitanmonopalmitat, Sorbitansesquioleat, Sorbitantrioleat, Polyoxyethylensorbitanmonolaurat, Polyoxyethylensorbitanmonostearat, Polyethylenglycolmonooleat, Polyethylenglycolalkylat, Polyoxyethylenalkylether, Polyglycoldiether, Lauroyldiethanolamid, Fettsäureisopropanolamid, Maltitolhydroxyfettsäure-ether, alkyliertem Polysaccharid, Alkylglucosid, Zuckerester, oleophiles Glycerolmonostearat, selbstemulgierbarem Glycerolmonostearat, Polyglycerolmonostearat, Polyglycerolalkylat und Sorbitanmonooleat ausgewählt sind.

16. Verfahren nach Anspruch 14, wobei die anionischen oberflächenaktiven Stoffe aus Natriumstearat, Kaliumpalmitat, Natriumacetylsulfat, Natriumlaurylphosphat, Natriumpolyoxyethylenlaurylsulfat, Triethanolamin-palmitat, Polyoxyethylennatriumlaurylphosphat und Natrium-N-acylglutamat oder Mischungen davon ausgewählt sind.

17. Verfahren nach Anspruch 14, wobei die kationischen oberflächenaktiven Stoffe aus Stearyldimethylbenzylammoniumchlorid, Stearyltrimethylammoniumchlorid, Benzalkoniumchlorid und Laurylaminoxide oder Mischungen davon ausgewählt sind.

18. Verfahren nach Anspruch 14, wobei die amphoteren oberflächenaktiven Stoffe aus Alkylaminoethylglycinchlorid und Lecithin oder Mischungen davon ausgewählt sind.

## Revendications

1. Procédé d'application d'une bouillie de pulvérisation dans une quantité maximale de 500 l/ha, la bouillie de pulvérisation comprenant un mélange actif, moyennant quoi la concentration du mélange actif va de 2 % en volume et 35 % en volume par rapport au volume de la bouillie de pulvérisation et dans lequel le mélange actif comprend un ou plusieurs tensioactifs dans une concentration de 10 % en volume à 35 % en volume par rapport au volume du mélange actif, et des huiles contenant des terpènes dans une concentration de 6 % en volume à 35 % en volume, par rapport au volume du mélange actif et dans lequel la bouillie de pulvérisation est appliquée sous forme de gouttelettes microscopiques ayant un diamètre médian en volume de 60 µm à 280 µm mesuré selon la norme ASABE S-572 relative aux gouttelettes.

2. Procédé selon la revendication 1 dans lequel la bouillie de pulvérisation est appliquée dans un volume de pulvérisation maximal de 200 l/ha avec une concentration du mélange actif allant de 2 à 35 % en volume.

3. Procédé selon l'une quelconque des revendications 1 ou 2 dans lequel la concentration du mélange actif va de 8 % en volume à 20 % en volume, par rapport au volume de la bouillie de pulvérisation.

4. Procédé selon l'une quelconque des revendications 1 ou 2 dans lequel la concentration du mélange actif va de 12 % en volume à 22 % en volume, par rapport au volume de la bouillie de pulvérisation.

5. Procédé selon l'une quelconque des revendications 1 ou 2 dans lequel la concentration des huiles contenant des terpènes dans la bouillie de pulvérisation va de 0,2 à 10 % en volume, de préférence de 2 à 7 % en volume et de préférence encore de 3 à 6 % en volume.

6. Procédé selon l'une quelconque des revendications précédentes où le mélange actif est un pesticide.

7. Procédé selon l'une quelconque des revendications précédentes où le mélange actif est un adjuvant.

8. Procédé selon l'une quelconque des revendications précédentes, dans lequel la bouillie de pulvérisation est appliquée à la plante par l'intermédiaire d'un pulvérisateur électrostatique et/ou électrodynamique ou à l'aide d'un brumisateur.

9. Procédé selon l'une quelconque des revendications précédentes, dans lequel les huiles contenant des terpènes sont une essence d'agrumes.

10. Procédé selon la revendication 9, dans lequel les huiles contenant des terpènes contiennent au moins 50 % de terpènes et sont une essence d'agrumes.

11. Procédé selon les revendications 9 ou 10, dans lequel l'essence d'agrumes est choisie dans le groupe constitué de l'essence d'orange, de l'essence de citron, de l'essence de citron vert, de l'essence de pamplemousse et de l'essence de mandarine.

12. Procédé selon l'une quelconque des revendications précédentes, dans lequel la bouillie de pulvérisation et/ou le mélange actif comprennent du borax, un engrais ou des oligo-éléments.

13. Procédé selon l'une quelconque des revendications précédentes, dans lequel la bouillie de pulvérisation et/ou le mélange actif comprennent en outre un insecticide, un fongicide, un herbicide, un nématicide ou un acaricide.

14. Procédé selon l'une quelconque des revendications précédentes, dans lequel la bouillie de pulvérisation et/ou le mélange actif comprennent un ou plusieurs tensioactifs choisis dans le groupe constitué des tensioactifs non ioniques, des tensioactifs anioniques, des tensioactifs cationiques et des tensioactifs amphotères.

15. Procédé selon la revendication 14, dans lequel le tensioactif non ionique est choisi parmi le monolaurate de sorbitane, le monopalmitate de sorbitane, le sesquioléate de sorbitane, le trioléate de sorbitane, le monolaurate de polyoxyéthylène sorbitane, le monostéarate de polyoxyéthylène sorbitane, le monooléate de polyéthylène glycol, l'alkylate de polyéthylène glycol, l'alkyl-éther de polyoxyéthylène, le diéther de polyglycol, le diéthanolamide laurique, un iso-propanolamide d'acide gras, un éther d'acide gras hydroxyde de maltitol, un polysaccharide alkylé, un glucoside d'alkyle, un ester de sucre, un monostéarate de glycérol oléophile, un monostéarate de glycérol auto-émulsionnable, le monostéarate de polyglycérol, l'alkylate de polyglycérol et le monooléate de sorbitane.

16. Procédé selon la revendication 14, dans lequel le tensioactif anionique est choisi parmi le stéarate de sodium, le palmitate de potassium, le cétylsulfate de sodium, le laurylphosphate de sodium, le laurylsulfate polyoxyéthylène de sodium, le palmitate de triéthanolamine, le laurylphosphate polyoxyéthylène de sodium et le N-acyl glutamate de sodium ou leurs mélanges.

17. Procédé selon la revendication 14, dans lequel le tensioactif cationique est choisi parmi le chlorure d'ammonium stéarylique de diméthylbenzyle, le chlorure d'ammonium stéarylique de triméthyle, le chlorure de benzalkonium, et l'oxyde de laurylamine ou leurs mélanges.

18. Procédé selon la revendication 14, dans lequel le tensioactif amphotère est choisi parmi le chlorure d'alkylaminoéthyl-glycine et la lécithine ou leurs mélanges.
